Europäisches Patentamt

European Patent Office

Office européen des brevets

(11) Numéro de publication: **0 011 070**
**B1**

(12) **FASCICULE DE BREVET EUROPEEN**

(45) Date de publication du fascicule du brevet: **19.09.84**

(21) Numéro de dépôt: **78400043.2**

(22) Date de dépôt: **29.06.78**

(51) Int. Cl.³: **H 04 M 11/02, G 09 F 9/00**

(54) **Ensemble d'affichage à distance de messages évolutifs.**

(43) Date de publication de la demande:
**28.05.80 Bulletin 80/11**

(45) Mention de la délivrance du brevet:
**19.09.84 Bulletin 84/38**

(84) Etats contractants désignés:
**DE FR GB NL SE**

(56) Documents cités:
**CH-A- 537 065**
**DE-B-1 049 928**
**FR-A-1 116 418**
**FR-A-1 432 620**
**FR-A-1 510 248**
**FR-A-1 565 651**
**US-A-3 883 695**

(73) Titulaire: **Gottesman, Victor**
**49, rue Lamennais**
**F-9237 Chaville (FR)**

(72) Inventeur: **Gottesman, Victor**
**49, rue Lamennais**
**F-9237 Chaville (FR)**

(74) Mandataire: **Arnaud, Jean Pierre Alfred**
**94 rue Saint Lazare**
**F-75009 Paris (FR)**

Courier Press, Leamington Spa, England.

EP 0 011 070 B1

## Description

La présente invention concerne un ensemble d'affichage automatique et à distance d'une série de messages évolutifs, sur au moins un appareil prévu à cet effet, par exemple un panneau d'affichage, et plus précisément, un ensemble d'affichage qui est remis automatiquement à jour par des informations provenant de diverses sources.

On connaît déjà des systèmes de transmission de données d'un certain nombre de points d'émission séparés d'un point central auquel l'information reçue est continuellement disponible sous forme d'une représentation visuelle, la transmission des données s'effectuant par la réseau téléphonique public. Ainsi, le brevet FR—A—1 510 248 décrit un tel système dans lequel chaque émetteur produit automatiquement, suivant une séquence minutée ou rythmée, une impulsion de démarrage, un groupe d'impulsions d'adresse identifiant l'émetteur et un groupe d'impulsions d'information. Un tel système est notamment destiné à la réservation des chambres d'hôtels d'une localité déterminée. Dans cet appareil, l'opérateur de chaque émetteur forme sur un cadran un numéro d'appel téléphonique d'un poste récepteur central, puis attend la réponse de ce poste central; dès que ce signal arrive, l'opérateur enfonce une touche ou commande un organe destiné à déclencher la transmission. Lorsque cette dernière est terminée, le récepteur cesse de fonctionner et le circuit téléphonique établi par l'opération de numérotation est libéré par l'opérateur du poste émetteur si bien que la communication est interrompue de manière habituelle.

Les brevets FR—A—1 116 418, FR—A—1 193 533, FR—A—1 432 620 et FR—A—1 565 651 décrivent d'autres procédés et dispositifs de transmission d'informations convenant notamment à un système de réservation hôtolière, dans lequel les émetteurs et les récepteurs sont reliés par des lignes téléphoniques.

Tous les sytèmes décrits précédemment présentent une certain nombre d'inconvénients, les deux principaux étant d'une part l'obligation de la présence d'un opérateur pour la remise à jour des panneaux ou dispositifs d'affichage, et d'autre part l'absence de toute réaction entre les panneaux d'affichage et la source des informations. En pratique, on constate que les informations portées par de tels panneaux sont peu fiables.

Le brevet FR—A— 1 228 377 décrit un système de renseignements de location de places, mettant en oeuvre un matériel et un investissement intellectuel de réalisation extrêmement importants. L'échange des informations est toujours très complexe et nécessite un personnel spécialisé pour la commande des émetteurs. Ce système est extrêmement puissant et il est donc beaucoup trop coûteux pour des applications qui ne nécessitent que le traitement d'un petit nombre d'informations, par exemple dans les systèmes de réservation de chambres d'hôtel.

Le document CH—A—537 065 décrit une installation d'affichage automatique et à distance de messages évolutifs comportant plusieurs émetteurs équipés chacun d'un coupleur destiné à relier chaque émetteur à une ligne d'un réseau téléphonique, un récepteur comprenant un coupleur destiné à relier le récepteur au réseau téléphonique et un appareil d'affichage relié au récepteur. Un émetteur comporte une circuit qui, après avoir été manoeuvré par l'opérateur, permet l'exécution de la transmission d'informations au récepteur. Cette installation ne comporte aucun dispositif permettant la validation automatique et instantanée de l'établissement de la communication entre un émetteur et le récepteur.

L'invention concerne un ensemble d'affichage automatique et à distance de messages évolutifs sur au moins un appreil d'affichage, par exemple un panneau d'affichage, cet ensemble nécessitant un appareillage relativement peu important et comprenant des émetteurs qui peuvent être utilisés par un personnel non expérimenté.

Plus précisément, l'invention concerne un ensemble d'affichage automatique et à distance d'une série de messages évolutifs de structure déterminée sur au moins un appareil d'affichage, l'ensemble étant du type qui comprend plusieurs émetteurs qui transmettent ladite série de messages évolutifs, chacun desdits émetteurs comportant un premier coupleur destiné à relier l'émetteur à une ligne d'un réseau téléphonique, au moins un récepteur comprenant un deuxième coupleur destiné à relier le récepteur audit réseau téléphonique, et au moins cet appareil d'affichage relié au récepteur et destiné à afficher automatiquement au moins certains des messages provenant de certains émetteurs ou de la totalité de ceux-ci, ledit premier coupleur comportant au moins une première ligne d'entrée destinée à être reliée au réseau téléphonique et au moins deux premières lignes principales de sortie dont l'une est reliée à un combiné téléphonique permettant à l'opérateur de superviser la transmission et l'autre à des circuits de l'émetteur destinés à la transmission desdits messages évolutifs, ledit ensemble d'affichage étant caractérisé en ce que chaque émetteur comporte un circuit de veille destiné à être armé lorsque l'émetteur doit effectuer une transmission ou à tout moment, et à indiquer à l'émetteur que celui-ci est relié au récepteur, le premier coupleur étant tel que le combiné téléphonique reste relié à la ligne téléphonique tant que le circuit de veille n'a pas indiqué à l'émetteur qu'il est relié au récepteur et étant tel que après cette indication il est commuté en reliant lesdits circuits de l'émetteur à la ligne téléphonique.

De préférence, le premier coupleur comporte au moins, en plus de la première ligne d'entrée et d'au moins les deux premières lignes principales de sortie, une première ligne secondaire de sortie directement reliée à la première ligne d'entrée, un dispositif de commutation destiné à relier alternativement la première ligne d'entrée à l'une ou l'autre des deux premières lignes principales de sortie, et une première entrée de signaux de commande du dispositif de commutation.

De préférence, le deuxième coupleur comporte au moins une seconde ligne d'entrée destinée à être reliée au réseau téléphonique, au moins deux secondes lignes principales de sortie, une seconde ligne secondaire de sortie directement reliée à la seconde ligne d'entrée, un dispositif de commutation destiné à relier alternativement la seconde ligne d'entrée à l'une ou l'autre des deux secondes lignes principales de sortie, et une seconde entrée de signaux de commande du dispositif de commutation.

L'un au moins des émetteur comprend avantageusement un détecteur de signaux de ligne téléphonique, relié à la première ligne secondaire de sortie du coupleur et au circuit de veille, un premier circuit logique de commande faisant partie desdits circuits de l'émetteur et relié d'une part à l'autre des deux premières lignes principales de sortie du coupleur et d'autre part à ladite première entrée de signaux de commande du premier dispositif de commutation, et un dispositif de codage relié au circuit logique de commande. De préférence, l'un au moins des émetteurs comporte en outre un premier modulateur reliant le premier circuit logique de commande à l'autre des deux premières lignes principales de sortie du coupleur. L'un au moins des émetteurs comprend en outre avantageusement un dispositif de signalisation.

Il est avantageux que le récepteur comprenne un détecteur d'appel relié à la seconde ligne secondaire de sortie, un deuxième circuit logique de commande relié à l'autre des deux secondes lignes principales de sortie et à la seconde entrée de signaux de commande du deuxième dispositif de commutation, et un deuxième modulateur relié à l'autre des deux secondes lignes principales de sortie et destiné à transmettre un message d'accusé de réception. De préférence, le récepteur comprend en outre au moins un troisième modulateur avec un troisième coupleur et/ou un démodulateur et au moins un quatrième coupleur destinés à assurer d'autres liaisons téléphoniques ou non, avec le même réseau ou d'autres réseaux.

L'appareil d'affichage comprend avantageusement un décodeur d'adresse, une mémoire et un dispositif d'affichage.

L'appareil comprend avantageusement au moins un appareil secondaire destiné à afficher une partie au moins des messages affichés par l'appareil d'affichage, avec ou sans message supplémentaire.

D'autres caractéristiques et avantages de l'invention ressortiront mieux de la description qui va suivre d'un ensemble d'affichage selon l'invention appliqué à un système de réservation hôtelière, faite en référence aux dessins annexés sur lesquels:

— la figure 1 est un diagramme synoptique très schématique permettant la description du fonctionnement général d'un ensemble d'affichage selon l'invention;

— la figure 2 est un diagramme synoptique plus détaillé d'un émetteur de l'ensemble d'affichage de la figure 1; et

la figure 3 est un diagramme synoptique d'un récepteur et d'un appareil principal d'affichage d'un ensemble d'affichage du type représenté sur la figure 1.

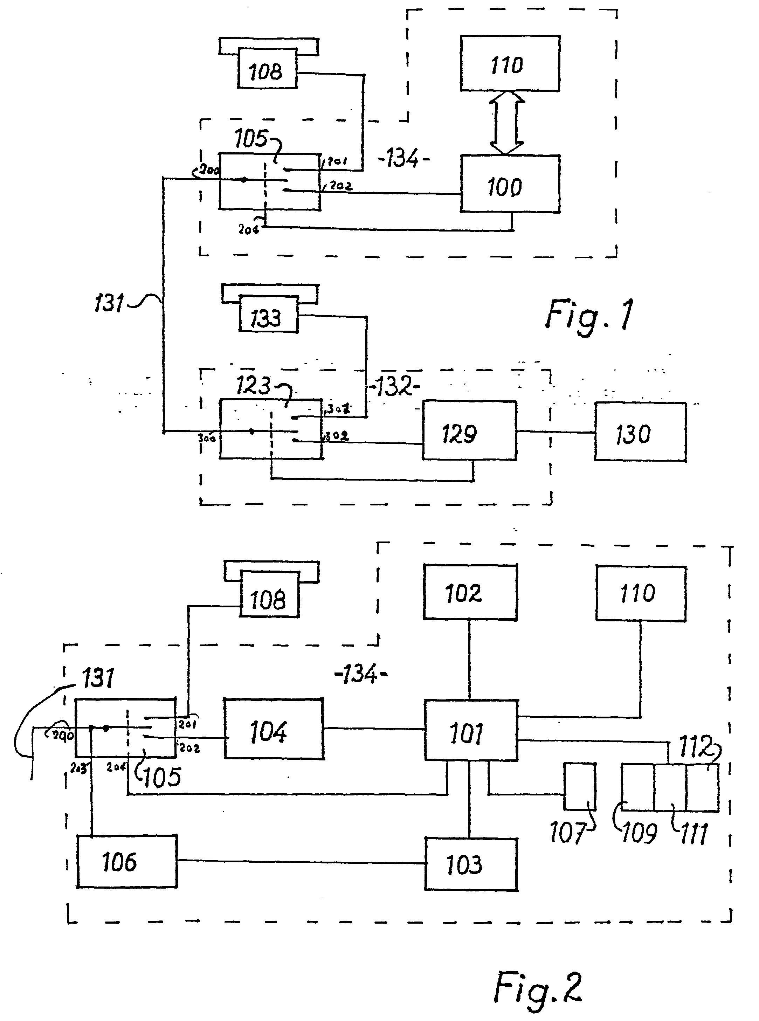

La figure 1 est un diagramme synoptique très simplifié d'un ensemble d'affichage selon l'invention.

L'ensemble de la figure 1 comporte plusieurs émetteurs dont un seul est représenté dans le cadre en traits interrompus 134, un récepteur disposé dans le cadre en traits interrompus 132, et un appareil d'affichage repéré par la référence 130.

L'émetteur comprend un coupleur 105 destiné à permettre la connexion à une ligne téléphonique 131 soit d'un poste téléphonique 108 d'abonné, soit du circuit 100 de l'émetteur. Ce dernier circuit est relié à un dispositif 110 de codage, décrit plus en détail dans la suite.

Le récepteur 132 est relié à l'émetteur 134 par la ligne téléphonique 131 qui peut être une ligne du réseau public et qui peut comporter plusieurs centraux téléphoniques. Le coupleur 123 du récepteur 132 assure la connexion soit à un poste téléphonique 133, soit au circuit principal 129 du récepteur 132 qui commande lui-même un appareil 130 d'affichage.

Lors de l'utilisation d'un ensemble d'affichage selon l'invention, un opérateur, lorsqu'il a préparé le dispositif 110 de codage d'un émetteur, décroche le combiné et numérote l'adresse du récepteur, le coupleur 105 étant dans la position qui assure la connexion du poste 108 à la ligne 131. Lorsque l'appel parvient au récepteur 132 et plus précisément au coupleur 123, celui-ci est commuté et la récepteur indique automatiquement à l'émetteur 134 qu'il est en ligne. A ce moment, le coupleur 105 de l'émetteur est commuté et la circuit 100 peut transmettre directement des messages correspondant aux informations codées du dispositif 110 au circuit principal 129 de récepteur 132. Celui-ci les transmet ensuite à l'appareil 130 d'affichage. Ensuite, l'émetteur indique la fin de la réception et les deux coupleurs 105 et 123 peuvent commuter afin qu'ils remettent les combinés téléphoniques en ligne ou d'autres opérations, notamment de validation, peuvent être affectuées.

Le fonctionnement qu'on vient de décrire est très simple. Il ne nécessite qu'un opérateur non expérimenté au niveau de l'émetteur, et les opérations à effectuer sont simples et peu nombreuses. Le récepteur ne nécessite aucun opérateur et il peut donc fonctionner vingt quatre heures sur vingt quatre, automatiquement et sans personnel.

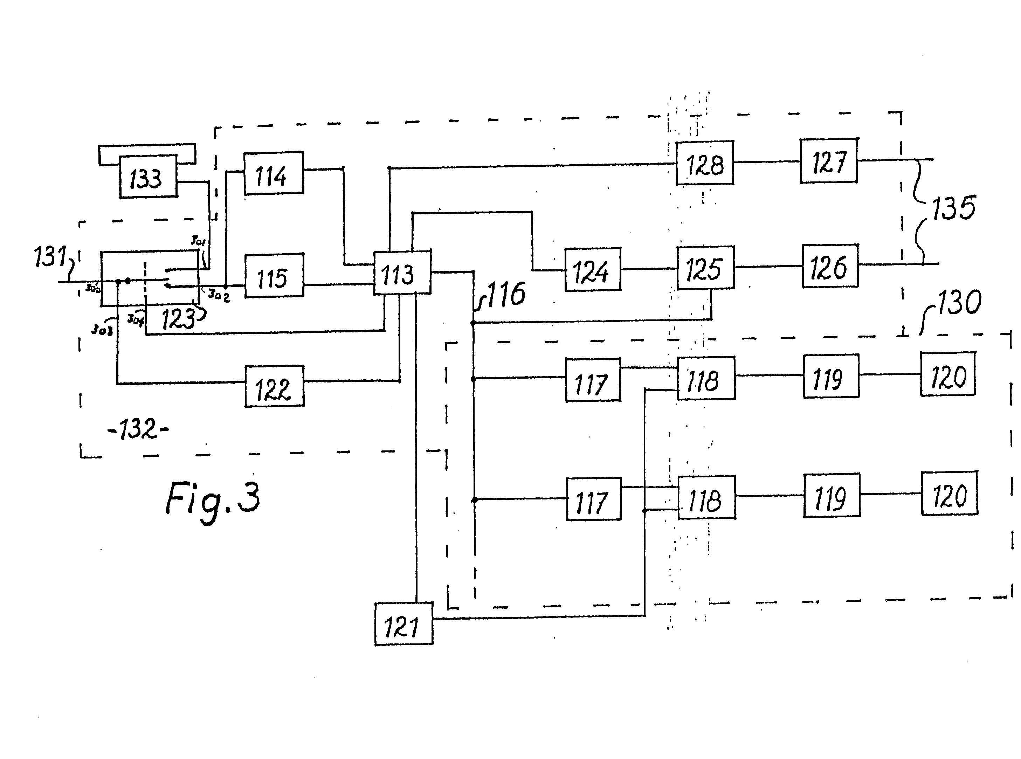

Les figures 2 et 3 représentent d'une part un émetteur et d'autre par un récepteur et un appareil d'affichage, sous forme d'un panneau d'affichage, de l'ensemble de la figure 1.

Plus précisément, la figure 2 représente l'un des émetteurs 134 de l'ensemble d'affichage qui peut en comprendre plusieurs. Cet émetteur comprend le coupleur 105 déjà décrit en référence à la figure 1. Ce coupleur comprend une ligne principale d'entrée reliée à la ligne téléphonique 131, deux lignes principales de sortie dont l'une est reliée au poste 108 d'abonné et l'autre à un modulateur 104, une ligne secondaire de sortie, reliée à un détecteur à haute impédance 106 et une ligne de signaux de commutation, reliée à un circuit logique 101 de commande de l'émetteur. Le détecteur 106 comprend par exemple un circuit série RC. L'émetteur comprend en outre un circuit 103 de veille relié au détecteur 106 et au circuit logique 100. Ce dernier est relié à un circuit générateur d'adresse 102, au dispositif de codage 110, cité en référence à la figure 1 et décrit dans la suite, et à des dispositifs de signalisation 109, 111 et 112 ainsi qu'à une touche 107 de commande de transmission qui peut être utilisée dans certains cas.

Dans le circuit décrit précédemment, le rôle du détecteur à haute impédance 106 et du circuit 103 de veille est la détection d'une totalité dans la ligne téléphonique 131, et l'indication au circuit logique (101) de la possibilité de la transmission. Le modulateur 104 est simplement destiné à mettre les informations que lui transmet le circuit 101 sous une forme convenant à la transmission. Le générateur 102 transmet une adresse que le circuit logique 101 accole à tout message transmis. Les dispositifs 109, 111 et 112 sont simplement destinés à donner à l'opérateur des indications sur le déroulement des opérations comme indiqué dans la suite, en référence au fonctionnement détaillé. En fait, les seuls dispositifs directement utilisés par l'opérateur sont le dispositif 110 de codage, éventuellement la touche 107 de transmission, et le poste téléphonique 108 (ou un circuit numéroteur automatique comme indiqué dans la suite).

Lors d'une opération, l'opérateur de l'émetteur commence par préparer le dispositif 110 de codage. Ce dernier peut être simplement formé d'interrupteurs, par exemple à boutons poussoirs destinés à donner des informations aussi simples que "chambres libres", ou "hôtel complet". Ce dispositif de codage peut aussi être plus élaboré et peut par exemple comporter des roues de codage, des lecteurs de cartes, des lecteurs de bandes ou un clavier permettant par exemple l'affichage d'informations plus complètes, notamment un nombre de chambres disponibles, dans une seule catégorie ou dans plusieurs catégories, etc. Lorsque l'opérateur a terminé sa préparation du dispositif de codage, il appuise sur la touche 107 de transmission qui prépare l'émetteur à la transmission ultérieure. Cette préparation peut aussi être automatique, après l'écoulement d'un certain temps sans manoeuvre. La commande de la touche 107 arme le circuit 103 de veille et prépare le circuit logique 101 de commande en vue des opérations ultérieures. Ensuite, l'opérateur décroche le combiné du poste téléphonique 108 et compose le numéro de téléphone du récepteur auquel sont destinées les informations. Cette opération peut être simplifiée par incorporation d'un numéroteur automatique de type bien connu, fonctionnant avec au sans détection de fréquences du réseau automatique. Lorsque le récepteur s'est relié à la ligne 131 comme indiqué dans la suite du présent mémoire, il émet un signal à une fréquence particulière, destiné au detecteur 106. Lorsque ce dernier a détecté le signal du récepteur, le circuit 103 de veille le transmet au circuit logique 101 qui commute le coupleur, alors relié au poste 108 d'abonné, vers la sortie du modulateur. A ce moment, l'opérateur peut raccrocher son combiné ou non, et il peut notamment écouter la suite de la transmission; il n'a de toute façon aucune autre opération à effectuer, sinon vérifier éventuellement l'état des voyants 109, 111, 112 indiquant la progression des opérations. La transmission du message s'effectue automatiquement sous la commande du circuit logique 101; le message codé comprend les informations indiquées par le dispositif 110 de codage, et une adresse provenant du générateur 102 et accolée aux informations par le circuit logique 101. Les voyants 109, 111 et 112 indiquent le progression des opérations, le voyant 111 indiquant que la transmission n'est pas encore effectuée et le voyant 109 qu'elle a été effectuée par exemple. Bien entendu, le nombre, la disposition et le rôle des différents voyants sont donnés à titre purement illustratif, et toutes sortes de combinaisons sont possibles dans le cadre de l'invention.

Lorsque la transmission a été effectuée par le circuit logique, celui-ci attend la réception, par l'intermédiaire du détecteur 106 et éventuellement du circuit 103 de veille, d'un accusé de réception provenant du récepteur et indiquant que la transmission a été réellement enregistrée. Le récepteur peut demander une nouvelle transmission permettant la validation du message. Dans le cas contraire, le circuit 101 provoque la commande du dispositif 112 de signalisation indiquant que la transmission n'est pas effectuée.

Les différentes circuits 101, 102, 103, 104 et 106 peuvent être de type câblé. Cependent, l'émetteur peut aussi comporter un microcalculateur destiné à effectuer la totalité ou une partie des opérations des circuit précités, mis à part celles du dispositif 110 de codage et du dispositif 109, 111, 112 de signalisation.

Le circuit de veille peut être verrouillé afin qu'il reste toujours en ligne. Il peut aussi être déconnecté par l'opérateur. La commande d'un bouton de transmission peut alors provoquer le fonctionnement du coupleur 105 et l'émission des données, après détection de la réponse du récepteur.

Les dispositifs de signalisation 109, 111 et 112 peuvent être de tout type; par exemple, ils peuvent comprendre des vibreurs ou un ou plusieurs dispositifs d'affichage indiquant en clair les opérations en cours.

La figure 3 est un diagramme synoptique représentant d'une part un circuit récepteur 132 et d'autre part un panneau d'affichage 130. Le circuit récepteur 132 comprend un coupleur 123 qui, comme le coupleur 105 de l'émetteur 134, comporte une ligne d'entrée, deux lignes principales de sortie reliées l'une à un poste téléphonique 133 et l'autre à un circuit logique de commande 113, par l'intermédiaire d'un modulateur 114 et d'un démodulateur 115, une ligne secondaire de sortie reliée directement à la ligne d'entrée et parvenant à un détecteur 122 de sonnerie, et une ligne de signaux de commutation, reliée au circuit logique 113. Les divers éléments qu'on vient de citer constituent les circuits principaux du récepteur, avec la ligne omnibus 116 qui reçoit des messages du circuit logique 113 de commande et qui les transmet au panneau d'affichage 130.

Lors du fonctionnement de l'émetteur 132, lorsque le circuit 122 détecte un appel d'un émetteur, le circuit logique 113 commute directement le coupleur afin que le modulateur 114 et le démodulateur 115 soient reliés à la ligne 131. Le modulateur 114 permet la transmission à la ligne 131 du signal destiné à indiquer à l'émetteur que le récepteur est en ligne. Les informations provenant de l'émetteur parviennent alors au démodulateur 115 et au circuit logique 113 qui peut les conserver en mémoire et/ou qui peut les transmettre directement à la ligne commune 116. Lorsque le circuit logique 113 a déterminé que le message reçu est complet, il transmet, par l'intermédiaire du modulateur 114, un signal d'accusé de réception qui parvient à la ligne 131 et à l'émetteur 134 qui sait ainsi que la transmission a été enregistrée; le circuit logique 113 peut aussi transmettre une demande de répétition des informations.

Le récepteur 132 peut être relié par ailleurs à d'autres lignes 135, téléphoniques ou autres, par l'intermédiaire d'un circuit logique 124 d'appel, d'un circuit modulateur 125 et d'un coupleur 126, permettant la transmission d'informations par exemple à d'autres panneaux d'affichage ou à des lignes téléphoniques; le récepteur peut aussi comporter un coupler 127 et un démodulateur 128, destinés à transmettre au circuit logique 113 de commande d'autres informations provenant de diverses sources et notamment d'autres lignes téléphoniques 135. Ces divers circuits donnent une très grande souplesse au récepteur, dans le cas d'ensembles assez élaborés, par exemple de différents types décrits dans la suite du présent mémoire. Des batteries 121 alimentent l'ensemble.

Le circuit 113 de commande peut comporter une mémoire, comme indiqué précédemment, destinée à conserver, pour chaque adresse, les messages provenant des émetteurs et destinés au panneau 130. De cette manière, les circuits précités 127, 128, comprenant un coupleur et un démodulateur, permettent par exemple la consultation externe des informations convervées dans la mémoire du circuit logique 113, par l'intermédiaire d'une ligne téléphonique 135. En outre, ce circuit logique 113 peut assurer la remise à jours d'informations non seulement des panneaux 130 mais aussi de panneau reliés par d'autres lignes téléphoniques 135, par l'intermédiaire du circuit logique 124 d'appel, du modulateur 125 et du coupleur 126 par exemple.

Le circuit logique 113 de commande transmet les messages à la ligne commune 116 qui alimente elle-même le panneau d'affichage 130. On a représenté ce dernier, dans le cadre en traits interrompus de la figure 3, sous forme de deux circuits parallèles comprenant chacun un décodeur d'adresse 117, une mémoire 118, un circuit 119 de pilotage et un dispositif 120 d'affichage. Cependent, le panneau peut comprendre un seul circuit ou au contraire un plus grand nombre. Lorsque le panneau 130 consitué un panneau principal, il affiche toutes les informations qu'il reçoit, aux adresses convenables. Au contraire, s'il s'agit d'un panneau secondaire, il peut n'afficher que certaines informations qu'il trie lui-même. Les dispositifs 120 d'affichage peuvent être de différents types. Par exemple il peut s'agir de simples voyants sous forme de lampes témoins allumées ou éteintes, de dispositifs alphanumériques, de dispositifs d'affichage indiquant les informations en clair, d'un écran de visualisation ou même d'une imprimante qui peut éventuellement donner des tickets de réservation. Un synthétiseur de parole peut émettre un texte intelligible et directement assimilable par une oreille humaine, soit directement soit par l'intermédiaire d'une ligne de transmission, par exemple téléphonique. Lorsque la connaissance des informations est payante, un monnayeur peut aussi être incorporé au panneau 130.

Il est aussi possible que certaines informations seulement soient affichées; le panneau 130 peut alors comporter un dispositif d'interrogation, par exemple à clavier ou commandé par un lecteur de cartes par exemple. Cette interrogation est analogue à l'interrogation téléphonique décrite précédemment et réalisée par l'intermédiaire du coupler 127 et du démodulateur 128.

Les message échangés entre l'émetteur et le récepteur peuvent avoir toute structure commande, essentiellement fixée en fonction de l'importance du message. De toute manière, les données transmises peuvent toujours être validées, par exemple par renvoi automatique des données et comparaison des données renvoyées aux données initiales.

Dans une variante, le récepteur ou au moins un récepteur peut consulter les émetteurs automatiquement, cycliquement et à intervalles qui peuvent être déterminés en fonction de l'application; les émetteurs ainsi interrogés donnent alors les informations du circuit de codage. A cet effet, l'émetteur ou chaque émetteur comporte un détecteur de sonnerie ou d'appel de type bien connu; ce détecteur peur assurer le décrochage automatique ou uniquement lorsque l'information à transmettre a changé depuis le dernier appel.

En outre, un émetteur et un récepteur peuvent être associés de diverses manières, comme indiqué dans la suite du présent mémoire en référence à des applications particulières de l'ensemble d'affichage selon l'invention.

Le mode de réalisation particulier d'ensemble d'affichage décrit précédemment est destiné à l'indication des disponibilités hôtelières. Dans ce cas, les différents émetteurs sont disposés dans des hôtels, des pensions de famille, etc., et l'ensemble peut comprendre un seul récepteur, placé par exemple dans une gare, un aéroport, un syndication d'initiatives, une station service, à l'entrée d'une ville ou d'une région, etc. Cependant, il est préférable que plusieurs appareils d'affichage, par exemple des panneaux, soient disponibles. Ainsi, les panneaux d'affichage placés à certain points peuvent indiquer uniquement les disponibilités hôtelières d'une région alors que, en d'autres points, les disponibilités affichées portent sur une région plus grande, différente ou comprenant un partie de la première région. Par ailleurs, seules certaines catégories d'hôtels peuvent transmettre des informations à certain panneaux secondaires. D'autres informations peuvent aussi être données par les panneaux, par exemple les places disponibles dans les terrains de camping.

Le panneau d'affichage peut comporter une fonction de numérotation automatique destinée à mettre l'utilisateur du panneau en rapport avec l'hôtelier de son choix.

Une autre application importante d'un ensemble d'affichage selon l'invention est l'établissement des disponibles en lits des services spécialisés d'hôpitaux et/ou des centres d'urgence médicale. Dans ce cas, les émetteurs sont disposés dans les divers services des hôpitaux, et les appareils d'affichage dans les centres d'urgence et aux services des entrées ou des urgences des hôpitaux.

Une autre application est celle de la signalisation de la présence ou de l'absence de personnes qui se déplacent souvent ou qui doivent être souvent disponibles. Ainsi, dans une grande société, il est parfois souhaitable que la présence ou l'absence de diverses personnes soit suivie, par exemple dans des chantiers disséminés sur un vaste territoire. Dans ce cas, les différents appareils d'affichage peuvent être disposés dans certains services ou certaines directions, ayant des ordres hiérarchiques différents et recevant des informations plus ou moins élaborées et plus ou moins étendues. L'ensemble d'affichage selon l'invention permet une grande souplesse dans cette application.

De manière générale, l'ensemble d'affichage selon l'invention convient à toute application dans laquelle des informations évolutives doivent être connues à tout moment.

Il est bien entendu que l'invention n'a été décrite et représentée qu'à titre d'exemple préférentiel et qu'on pourra apporter toute équivalence technique dans ses éléments constitutifs sans pour autant sortir de son cadre.

**Revendications**

1. Ensemble d'affichage automatique et à distance d'une série de messages évolutifs de structure déterminée sur au moins un appareil d'affichage (130), l'ensemble étant du type qui comprend plusieurs émetteurs (134) qui transmettent ladite série de messages évolutifs, chacun desdits émetteurs comportant un premier coupleur (105) destiné à relier l'émetteur à une ligne (131) d'un réseau téléphonique, au moins un récepteur comprenant un deuxième coupleur (123) destiné à relier le récepteur (132) audit réseau téléphonique, et au moins cet appareil d'affichage (130) relié au récepteur (132) et destiné à afficher automatiquement au moins certains des messages provenant de certains émetteurs ou de la totalité de ceux-ci, ledit premier coupleur (105) comportant au moins une première ligne d'entrée (200) destinée à être reliée au réseau téléphonique et au moins deux première lignes principales de sortie dont l'une (201) est reliée à un combiné téléphonique (108) permettant à l'opérateur de superviser la transmission et l'autre (202) à des circuits (100; 101, 104) de l'émetteur destinés à la transmission desdits messages évolutifs, ledit ensemble d'affichage étant caractérisé en ce que chaque émetteur (134) comporte un circuit de veille (103) destiné à être armé lorsque l'émetteur doit effectuer une transmission ou à tout moment, et à indiquer à l'émetteur que celui-ci est relié au récepteur, le premier coupleur (105) étant tel que le combiné téléphonique (108) reste relié à la ligne téléphonique (131) tant que le circuit de veille (103) n'a pas indiqué à l'émetteur (134) qu'il est relié au récepteur (132) et étant tel qu'après cette indication il est commuté en reliant lesdits circuits (100, 101, 104) de l'émetteur à la ligne téléphonique.

2. Ensemble selon la revendication 1, caractérisé en ce que le premier coupleur (105) au moins comporte, en plus de la première ligne d'entrée (200) et d'au moins les deux premières lignes (201, 202) principales de sortie, une première ligne (203) secondaire de sortie directement reliée à la première ligne d'entrée (200), un premier dispositif de commutation destiné à relier alternativement la première ligne d'entrée à l'une ou l'autre des deux premières lignes principales de sortie, et une première entrée (204) de signaux de commande du premier dispositif de commutation.

3. Ensemble selon la revendication 2, caractérisé en ce que le deuxième coupleur (123) comporte au moins une seconde ligne (300) d'entrée destinée à être reliée au réseau téléphonique, au moins deux secondes lignes (301, 302) principales de sortie, une seconde ligne (303) secondaire de sortie directement reliée à la seconde ligne d'entrée, un deuxième dispositif de commutation destiné à relier alternativement la seconde ligne d'entrée à l'une ou l'autre des deux secondes lignes principales de sortie, et une seconde entrée (304) de signaux de commande du deuxième dispositif de commutation.

4. Ensemble selon les revendications 2 ou 3, caractérisé en ce que l'une au moins des émetteurs (134) comprend un détecteur (106) de signaux de ligne téléphonique, relié à la première ligne (203) secondaire de sortie du premier coupleur (105) et au circuit de veille (103), un premier circuit logique de commande (101) faisant partie desdits circuits de l'émetteur et reliée d'une part à l'autre (202) des deux premières lignes principales de sortie du premier coupleur et d'autre part à ladite première entrée (204) de signaux de commande du premier dispositif de commutation, et un dispositif (110) de codage relié au circuit logique de commande (101).

5. Ensemble selon la revendication 4, caractérisé en ce que l'un au moins des émetteurs (134) comporte en outre un premier modulateur (104) reliant le premier circuit logique de commande (101) à l'autre (202) des deux premières lignes principales de sortie du premier coupleur (105).

6. Ensemble selon l'une des revendications 4 et 5, caractérisé en ce que l'un au moins des émetteurs (134) comprend en outre un dispositif de signalisation (109, 111, 112).

7. Ensemble selon l'une quelconque des revendications 3 à 6, caractérisé en ce que le récepteur (132) comprend un détecteur d'appel (122) relié à la seconde ligne (303) secondaire de sortie, un deuxième circuit logique de commande (113) relié à une première (302) des deux secondes lignes principales de sortie et à la seconde entrée (304) de signaux de commande du deuxième dispositif de commutation et un deuxième modulateur (114) relié à la première des deux secondes lignes principales de sortie et destiné à transmettre un message d'accusé de réception.

8. Ensemble selon la revendication 7, caractérisé en ce que le récepteur (132) comprend en outre au moins un troisième modulateur (125) avec un troisième coupleur (126) et/ou un démodulateur (128) et au moins un quatrième coupleur (127) destinés à assurer d'autres liaisons téléphoniques ou non, avec le même réseau ou d'autres réseaux.

9. Ensemble selon l'une quelconque des revendications 1 à 8, caractérisé en ce que l'appareil d'affichage (130) comprend un décodeur d'adresse (117), une mémoire (118) et un dispositif d'affichage (120).

10. Ensemble selon l'une quelconque des revendications précédentes, caractérisé en ce qu'il comprend au moins un appareil secondaire destiné à afficher une partie au moins des messages affichés par l'appareil d'affichage, avec au sans message supplémentaire.

**Patentansprüche**

1. Automatische Anordnung zur Fernanzeige einer Reihe von sich entwickelnden Nachrichten bestimmter Struktur an wenigstens einem Anzeigegerät (130), wobei die Anordnung solcher Art ist, daß sie mehrere Sender (134) umfaßt, welche die genannte Reihe von sich entwickelnden Nachrichten übertragen, wobei jeder dieser Sender einen ersten Koppler (105) zum Anschließen des Senders an eine Leitung (131) eines Telefonnetzes, wenigstens einen Empfänger, der einen zweiten Koppler (123) zur Verbindung des Empfängers (132) mit dem genannten Telefonnetz enthält, und wenigstens dieses Anzeigegerät (130) enthält, welches mit dem Empfänger (132) verbunden und dazu bestimmt ist, automatisch wenigstens bestimmte Nachrichten auzuzeigen, die von bestimmten Sendern oder allen Sendern ausgehen, wobei der erste Koppler (105) wenigstens eine erste Eingangsleitung (200) umfaßt, die dazu bestimmt ist, an das Telefonnetz angeschlossen zu werden, und wenigstens zwei erste Hauptausgangsleitungen aufweist, wovon die eine (201) an einen Telefon-Handapparat (108) angeschlossen ist, der dem Benutzer die Überwachung der Übertragung ermöglicht, während die andere (202) mit Schaltkreisen (100; 101, 104) des Senders verbunden ist, die zur Übertragung der genannten sich entwickelnden Nachrichten bestimmt sind, wobei die Anzeigeanordnung dadurch gekennzeichnet ist, daß jeder Sender (134) eine Überwachungsschaltung (103) umfaßt, die dazu bestimmt ist, in Bereitschaft versetzt zu werden, wenn der Sender eine Übertragung durchführen soll, oder aber zu jedem Zeitpunkt, und ferner dazu, dem Sender anzuzeigen, daß dieser mit dem Empfänger verbunden ist, wobei der erste Koppler (105) von solcher Art ist, daß der Telefon-Handapparat (108) mit den Telefonleitung (131) so lange verbunden bleibt, wie die Überwachungsschaltung (103) dem Sender (134) nicht angezeigt hat, daß er mit dem Empfänger (132) verbunden ist, und ferner von solcher Art ist, daß er nach dieser Anzeige umgeschaltet wird, um die genannten Schaltkreise (100; 101, 104) des Senders mit der Telefonleitung zu verbinden.

2. Anordnung nach Anspruch 1, dadurch gekennzeichnet, daß wenigstens der erste Koppler (105) zusätzlich zu der ersten Eingangsleitung (200) und den wenigstens zwei ersten Hauptausgangleitungen (201, 202) eine erste Hilfausgangsleitung (203) aufweist, welche direkt mit der ersten Eingangsleitung (220) verbunden ist, eine erste Umschaltvorrichtung aufweist, welche dazu bestimmt ist, abwechselnd die erste Eingangsleitung mit der einen oder der anderen der beiden Hauptausgangsleitungen zu verbinden, sowie einen ersten Eingang (204) für Steuersignale für die erste Umschaltvorrichtung umfaßt.

3. Anordnung nach Anspruch 2, dadurch gekennzeichnet, daß der zweite Koppler (123) wenigstens eine zweite Eingangsleitung (300) umfaßt, die dazu bestimmt ist, mit dem Telefonnetz verbunden zu werden, wenigstens zwei zweite Hauptausgangsleitungen (301, 302) umfaßt, eine zweite Hilfsausgangsleitung (303) aufweist, welche direkt mit der zweiten Eingangsleitung verbunden ist, eine zweite Umschaltvorrichtung umfaßt, die dazu bestimmt ist, abwechselnd die zweite Eingangsleitung mit der einen oder anderen der beiden zweiten Hauptausgangsleitungen zu verbinden, sowie einen ersten Eingang (304) für Steuersignale für die zweite Umschaltvorrichtung aufweist.

4. Anordnung nach Anspruch 2 oder 3, dadurch gekennzeichnet, daß wenigstens einer der Sender (134) einen Detektor (106) zur Erfassung von Telefonleitungssignalen umfaßt, der mit der ersten Hilfsausgangsleitung (203) des ersten Kopplers (105) und mit der Überwachungsschaltung (103) verbunden ist, eine erste Logik-Steuerschaltung (20)1 umfaßt, die Bestandteil der genannten Schaltkreise des Senders ist und einerseits mit der anderen (202) der beiden ersten Hauptausgangsleitungen des ersten Kopplers und andererseits mit dem ersten Eingang (204) für die Steuersignale der ersten Umschaltvorrichtung verbunden ist, sowie eine Codiervorrichtung (110) aufweist, welche mit der Logik-Steuerschaltung (101) verbunden ist.

5. Anordnung nach Anspruch 4, dadurch gekennzeichnet, daß wenigstens einer der Sender (134) ferner einen ersten Modulator (104) umfaßt, welcher die erste Logik-Steuerschaltung (101) mit der anderen (202) der beiden ersten Haupausgangsleitungen des ersten Kopplers (105) verbindet.

6. Anordnung nach Anspruch 4 oder 5, dadurch gekennzeichnet, daß wenigstens einer der Sender (134) ferner eine Signalisiervorrichtung (109, 111, 112) umfaßt.

7. Anordnung nach einem der Ansprüche 3 bis 6, dadurch gekennzeichnet, daß der Empfänger (132) eine Anrufdetektor (122) umfaßt, welcher mit der zweiten Hilfsausgangsleitung (303) verbunden ist, eine zweite Logik-Steuerschaltung (113) umfaßt, die mit einer ersten (302) der beiden zweiten Hauptausgangsleitungen und mit dem zweiten Eingang (304) für Steuersignale der zweiten Umschaltvorrichtung verbunden ist, sowie einen zweiten Modulator (114) umfaßt, welcher mit der ersten der beiden zweiten Hauptausgangsleitungen verbunden und dazu bestimmt ist, eine Empfangsbestätigungsnachricht auszusenden.

8. Anordnung nach Anspruch 7, dadurch gekennzeichnet, daß der Empfänger (132) ferner wenigstens eine dritten Modulator (125) mit einem dritten Koppler (126) und/oder einem Demodulator (128) sowie wenigstens einen vierten Koppler (127) umfaßt, welche dazu bestimmt sind, andere Telefonverbindungen zu gewährleisten oder auch nicht, und zwar mit demselben Netz oder mit anderen Netzen.

9. Anordnung nach einem der Ansprüche 1 bis 8, dadurch gekennzeichnet, daß das Anzeigegerät (130) einen Adressendecoder (117), einen Speicher (118) und eine Anzeigevorrichtung (120) umfaßt.

10. Anordnung nach einem der vorstehenden Ansprüche, dadurch gekennzeichnet, daß sie wenigstens ein sekundäres Gerät umfaßt, welches dazu bestimmt ist, wenigstens einen Teil der Nachrichten anzuzeigen, die durch das Anzeigegerät angezeigt werden, und zwar mit oder ohne zusätzliche Nachricht.

**Claims**

1. Automatic remote display system for displaying time-varying message series having determined structure on at least one display unit (130), said system including several transmitters (134) for transmitting said time-varying message series, each transmitter including first coupler (105) for conecting said transmitter to a telephone network line (131), at least a receiver including second coupler (123) for connecting said receiver (132) to said telephone network and said at least one display unit (130) connected to said receiver (132) for automatically displaying at least some messages from some or all transmitters, said first coupler (105) including at least a first input line (200) to be connected to said telephone network and at least two first main output lines of which one (201) is connected to a telephone set (108) for allowing an operator to supervise transmission and another (202) is connected to circuits (100, 101, 104) of said transmitter for transmitting said time-varying messages, said display system being characterized in that each transmitter (134) includes a watching circuit (103) to be set either when said transmitter has to transmit or at every time, for indicating to said transmitter that said transmitter is connected to said receiver, first coupler (105) being such as telephone set (108) remains connected to said telephone line (131) as long as said watching circuit (103) has not indicated to said transmitter (134) that is it connected to said receiver (132) and such as, after this indication, it it switched by connecting said receiver circuits (100; 101, 104) to said telephone line.

2. System according to claim 1, characterized in that at least said first coupler (105) includes, in addition to said first input line (200) and at least two first main output lines (201, 202), first secondary output line (203) directly connected to said first input line (200), first switching means for alternately connecting first input line to one or the other of said first main output lines, and first input (204) of signals for controlling said first switching means.

3. System according to claim 2, characterized in that said second coupler (123) includes at least a second input line (300) to be connected to said telephone network, at least two second main output lines (301, 302), a second secondary output line (303) directly connected to said second input line, second switching means for alternately connecting. second input line to one or the other of said two second main output lines, and a second input (304) of signals for controlling said second switching means.

4. System according to claim 2 or 3, characterized in that at least one transmitter (134) includes telephone line signal detector (106) connected to said first secondary output line (203) of said first coupler (105) and to said watching circuit (103), first logic control circuit (101) incorporated to said receiver circuits and connected on the one hand to the other (202) of said first main output lines of said first coupler and on the other hand to said first input (204) of signals for controlling said first switching means, and coding means (110) connected to said logic circuit (101).

5. System according to claim 4, characterized in that at least one of said transmitters (134) further includes first modulator (104) connecting said first logic control circuit (101) to the other (202) of said two first main output lines of said first coupler (105).

6. System according to claims 4 or 5, characterized in that at least one of said transmitters (134) further includes signalling means (109, 111, 112).

7. System according to any one of claims 3 to 6, characterized in that said receiver (132) includes call detector (122) connected to said second secondary output line (303), second logic control circuit (113) connected to a first (302) of said two second main output lines and to a second input (304) of signals for controlling said second switching means, and second modulator (114) connected to first of said second main output lines for transmitting acknowledgement message.

8. System according to claim 7, characterized in that said receiver (132) further includes at least one third modulator (125) with at least a third coupler (126) and/or a demodulator (128) and at least fourth coupler (127) for possibly providing other telephone links with said network or with other telephone networks.

9. System according to any one of claims 1 to 8, characterized in that said display unit (130) includes address decoder (117), memory (118) and display means (120).

10. System according to any one of the preceding claims, characterized in that it includes at least one secondary unit for displaying at least a portion of messages displayed by said display unit, with or without additional message.

0 011 070

Fig. 1

Fig. 2

Fig.3